# EUROPÄISCHE PATENTANMELDUNG

(11) **EP 0 909 859 A2**
(43) Veröffentlichungstag der Anmeldung: **21.04.1999**
(21) Anmeldenummer: 98250363.3
(22) Anmeldetag: 16.10.1998
(51) Int. Cl.: E04F 13/08, E04F 13/14, B44C 5/04

(54) **Waschbetonfassade**

(30) Priorität: 16.10.1997 DE 29718425 U
(71) Anmelder: Imbau Industrielles Bauen GmbH, 63263 Neu-Isenburg (DE)
(72) Erfinder: Sengpohl, Hans-Peter, 35325 Nieder-Ohmen (DE)
(74) Vertreter: Seewald, Jürgen, Dipl.-Ing.

(57) **Zusammenfassung**

Die vorliegende Erfindung betrifft eine Waschbetonfassade mit einer Vorsatzbetonschicht. Aufgabe ist es, für eine derartige Fassade eine neue Oberflächenoptik zur Verfügung zu stellen. Gelöst wird diese Aufgabe dadurch, daß die Körnung der Vorsatzbetonschicht aus gebrochenem Sicherheitsglas besteht.

## Beschreibung

Die vorliegende Erfindung betrifft eine Waschbetonfassade mit einer Vorsatzbetonschicht.

Die Vorsatzbetonschicht von Waschbetonfassaden wird nach dem Stand der Technik aus einer Mischung aus Zementmörtel und mineralischen Zuschlägen, wie z. B. Kies, Basalte, Kalksandsteine, Granite oder Marmore, die dazu auf die gewünschte Körnung zerkleinert und/oder gesiebt werden, hergestellt. Nach dem Abbinden der Mischung wird die Oberfläche der Waschbetonschicht mittels eines Hochdruckwasserstrahls bearbeitet, wodurch die oberste Mörtelschicht entfernt wird. Dadurch ergibt sich die typische Waschbetonoberfläche, die durch eine aus der Mörtelschicht teilweise herausragende Körnung gekennzeichnet ist.

Aufgabe der vorliegenden Erfindung ist es, eine Waschbetonfassade mit neuer Oberflächenoptik zur Verfügung zu stellen.

Gelöst wird diese Aufgabe dadurch, daß die Körnung der Vorsatzbetonschicht aus gebrochenem Sicherheitsglas besteht. Die an der Oberfläche der Vorsatzbetonschicht sichtbare Körnung aus Sicherheitsglas verleiht der Fassade je nach Lichteinwirkung einen glitzernden Effekt, der durch die Farbe des Sicherheitsglases, insbesondere aber in weiterer Ausgestaltung der Erfindung durch Einfärbung des Mörtels der Vorsatzbetonschicht farblich nuanciert werden kann.

Es hat sich herausgestellt, daß Sicherheitsglas aufgrund seines Bruchverhaltens hervorragend als Körnung für eine Waschbetonfassade geeignet ist. Sicherheitsglas bricht im wesentlichen rechtwinklig, so daß eine im wesentlichen quaderförmige oder würfelförmige Körnung entsteht, die zudem keine scharfen Bruchkanten aufweist. Dadurch werden Verletzungen von Personen, die mit der Fassade in Berührung kommen, vermieden. Besagte Körnungsform garantiert im Vergleich mit z. B. einer plättchen- oder pyramidenförmigen Körnung anderer Materialien auch einen sicheren Halt der Körnung in der Oberfläche der Vorsatzbetonschicht. Außerdem richtet sich die Glaskörnung aufgrund ihrer kubischen Form beim Verdichten der Vorsatzschicht durch Rütteln mit einer seiner Flächen parallel zum Boden der Schalung aus. Dadurch wird der optische Effekt (Transparenz) der Glaskörnung noch verstärkt. Des weiteren ist Sicherheitsglas alkalibeständig und eine Fassade mit einer Körnung aus Sicherheitsglas weist eine geringe Wassereindringung auf. Damit sind die wesentlichen Anforderungen an eine Fassade aus Waschbeton erfüllt.

Ein weiterer, wesentlicher Aspekt ist, daß das Sicherheitsglas nicht speziell hergestellt werden muß, sondern daß die Körnung aus Alt- bzw. Bruchmaterial hergestellt werden kann. Gebrauchtes bzw. zersprungenes Sicherheitsglas wird somit auf dem Recyclingweg einer sinnvollen Verwendung zugeführt.

In weiterer Ausgestaltung der Erfindung kann die Fassadenoberfläche mit einer Versiegelung oder Imprägnierung versehen werden, um einer Verschmutzung oder einer Auswaschung durch Umwelteinflüsse entgegenzuwirken.

Nachstehend wird die Herstellung einer erfindungsgemäßen Waschbetonfassade beschrieben, die abgesehen von der erfindungsgemäßen Körnung nicht von der als Stand der Technik bekannten abweicht, worin ein weiterer Vorteil der vorliegenden Erfindung zu sehen ist, da also alte und bewährte Technologien übernommen werden können.

Lieferanten des Rohmaterials für die herzustellende Körnung sind Glasfirmen, Reparaturwerkstätten für Autos bzw. speziell für Auto-Glasscheiben sowie Auto-Recyclinghöfe, die das Sicherheitsglas je nach Vorstellung des Architekten oder Bauherrn in gemischten oder ausgesuchten Farben des Glases zur Verfügung stellen. Da die Anlieferung des Glasbruchs in verschiedenen Größen bzw. Bruchstücken erfolgt, wird er zunächst in einer Zementmühle gebrochen und anschließend auf das gewünschte Korngrößenspektrum z. B. 0/2, 2/8, 8/16 und 16/32 mm ausgesiebt. Neben diesem Korngrößenspektrum wird der zu verwendende Zement, weiß oder grau, und eine eventuelle Einfärbung des Bindemittels mit dem Bauherrn oder Architekten besprochen. Dann erfolgt eine Mischungsberechnung, wobei auf 1 m³ Beton etwa 1000 kg Sicherheitsglaskörnung kommen. Die Mischungsbestandteile werden in einem Zwangsmischer gemischt und anschließend in einer ca. 4 cm starken Vorsatzschicht in die vorbereitete Schalung eingebracht.

Das Einbringen der Mischung erfolgt auf einer mit einer Verzögerungspaste eingewalzten Fläche mittels eines Betonkübels, wobei der Beton mit einem Rechen in der vorgenannten Stärke verteilt wird. Verdichtet wird die Menge mit einem Flächen- oder Außenrüttler des Fertigungstisches.

Der weitere Herstellungsablauf richtet sich nach dem Aufbau des zur Anwendung kommenden Fassadenelementes. Wenn eine vorgehängte Fassade konzipiert ist, wird vor dem Einbringen der Aufbetonschicht die Vorsatzbewehrung eingelegt. Bei der Sandwichfassade sind Verbundanker und Dämmung erforderlich, bevor die tragende bewehrte Wand hergestellt wird.

Das Ausschalen und Abwaschen der durch die Verzögerungspaste gewählten Auswaschtiefe wird am nächsten Tag, etwa 18 bis 20 Stunden nach dem Einbringen des Betons vorgenommen. Ggf. wird die Waschbetonoberfläche mittels Schrubber vom Zementschleier befreit und mit Wasser nachgespült. Die so hergestellte Waschbetonoberfläche mit einer Sicherheitsglaskörnung kann nachträglich mit einer Versiegelung oder Imprägnierung, je nach Wunsch des Bauherrn oder Architekten, behandelt werden.

Weiterhin ist die Herstellung großer Flächen bei Stahlbetonfertigteilen fabrikmäßig im Negativverfahren möglich. Damit einher geht der Vorteil monolithischer Fassaden.

## Patentansprüche

1. Waschbetonfassade mit einer Vorsatzbetonschicht, dadurch gekennzeichnet, daß die Körnung der Vorsatzbetonschicht aus gebrochenem Sicherheitsglas besteht.

2. Waschbetonfassade nach Anspruch 1, dadurch gekennzeichnet, daß der Mörtel der Vorsatzbetonschicht eingefärbt ist.

3. Waschbetonfassade nach Anspruch 1 oder Anspruch 2, dadurch gekennzeichnet, daß die Oberfläche der Vorsatzbetonschicht mit einer nachträglich aufgebrachten Versiegelung oder Imprägnierung versehen ist.
